# FASCICULE DE BREVET EUROPEEN

(11) **EP 3 881 711 B1**
(45) Date de publication et mention de la délivrance du brevet: **04.10.2023**
(21) Numéro de dépôt: 21160850.0
(22) Date de dépôt: 05.03.2021
(51) Int. Cl.: A44C 5/00, A44C 27/00, B32B 5/14, B44C 1/28, B44C 3/12, D06Q 1/10, H04M 1/02

(54) **PIÈCE MANUFACTURÉE, BRIN DE BRACELET DE MONTRE ET PROCÉDÉ DE FABRICATION DE LA PIÈCE MANUFACTURÉE**
FERTIGUNGSTEIL, FASERSTRANG EINES UHRENARMBANDS UND VERFAHREN ZUR HERSTELLUNG DIESES FERTIGUNGSTEILS
MANUFACTURED PART, WATCH STRAP STRAND AND METHOD FOR MANUFACTURING THE MANUFACTURED PART

(30) Priorité: 17.03.2020 CH 3132020
(43) Date de publication de la demande: 22.09.2021
(73) Titulaire: BIWI S.A., 2855 Glovelier (CH)
(72) Inventeur: BOURQUARD, Pascal, 2854 Bassecourt (CH)
(74) Mandataire: Bovard SA Neuchâtel

(56) Documents cités:
- DE-C1- 19 811 231
- JP-A- H0 693 300
- US-A- 4 243 709
- US-A- 5 273 697
- US-A- 5 549 938

## Description

### Domaine technique de l'invention

La présente invention concerne une pièce manufacturée, un brin de bracelet de montre et un procédé de fabrication permettant de fabriquer la pièce manufacturée.

L'invention peut avantageusement trouver application dans le domaine de l'horlogerie, dans le domaine de la maroquinerie, dans le domaine des articles de mode, dans le domaine des accessoires tels que les stylos et les lunettes ou dans d'autres domaines employant le caoutchouc ou d'autres polymères.

### État de la technique

Divers articles tels que les bracelets de montre ou des parties de ces articles sont au moins partiellement réalisés en caoutchouc naturel ou synthétique ou en un autre élastomère.

Selon une manière connue de décorer une partie en élastomère, on dépose une ou plusieurs encres selon des motifs prédéfinis ou de manière aléatoire, par exemple par impression, sur de la matière partiellement réticulée. Lors de la polymérisation finale, la ou les encres pénètrent superficiellement la matière se transformant alors en élastomère. Cette ou ces encres diffusent dans la matière, aussi bien dans le sens de l'épaisseur que latéralement. De ce fait, les décors obtenus ont des contours manquant de netteté.

Le document US 5 273 697 A propose un camouflage et un procédé pour le fabriquer. Dans ce procédé, des pièces en élastomère cru sont placées dans un moyen de cuisson. Chacune d'elles a une couleur unie mais les pièces ont des couleurs différentes entre elles. Les pièces en élastomère cru sont placées dans un moyen de cuisson après avoir été mélangées à un agent d'expansion propre à produire la libération d'un gaz.

### Exposé sommaire de l'invention

L'invention a au moins pour but de permettre d'améliorer la netteté du contour d'un décor coloré visible sur une partie en élastomère.

Ce but est atteint grâce à une pièce manufacturée qui est selon le préambule de la revendication 1 annexée et qui comporte au moins une couche. Cette couche comprend un assemblage d'éléments en feuille au moins partiellement faits d'élastomère, se prolongeant mutuellement sans chevauchement et formant ensemble un patchwork en comptant des paires d'éléments en feuille attenants qui ont un segment de contour commun et qui sont liés l'un à l'autre au niveau de leur segment de contour commun par une continuité de l'élastomère entre eux, à travers ce segment de contour commun et à l'intérieur du patchwork.

La pièce manufacturée selon le préambule de la revendication 1 annexée a été imaginée conjointement à un procédé de fabrication permettant de la réaliser. Ce procédé de fabrication est exposé plus loin.

Dans la pièce manufacturée selon le préambule de la revendication 1 annexée, des paires d'éléments en feuille parmi les éléments en feuille du patchwork sont constitués chacun de deux éléments en feuille attenants, qui ont un segment de contour commun et qui sont liés l'un à l'autre au niveau de leur segment de contour commun par une continuité de l'élastomère entre eux, à travers ce segment de contour commun et à l'intérieur du patchwork.

Lors de la fabrication de la pièce manufacturée selon le préambule de la revendication 1 annexée, on peut utiliser des éléments en feuille qui n'ont pas tous la même couleur. Ces éléments en feuilles s'unissent au niveau de leurs bords, lors d'une vulcanisation. Si un segment de contour est commun à deux éléments en feuille attenants qui sont de couleurs différentes, une ligne de séparation nette coïncidant avec ce segment de contour commun est obtenue entre les deux couleurs différentes. Pour autant, il n'y a pas discontinuité de l'élastomère au niveau du segment de contour commun, où les deux éléments en feuille attenants sont en effet liés l'un à l'autre par une continuité de l'élastomère entre eux.

Par ailleurs, la pièce manufacturée selon le préambule de la revendication 1 annexée a comme avantage de permettre d'augmenter la résistance à l'abrasion d'un motif coloré visible sur une partie en élastomère. En effet, parmi les éléments en feuille utilisés pour réaliser le patchwork, un élément en feuille d'une certaine couleur peut être élaboré de manière à avoir cette couleur sur toute son épaisseur ou, à tout le moins, sur une partie conséquente de son épaisseur. Dans ce cas, le décor délimité par le contour de cet élément en feuille ne peut pas s'effacer à moins que l'élément en feuille subisse une abrasion extrêmement importante.

Par rapport à ce que divulgue le document US 5 273 697 A susmentionné, la pièce manufacturée selon l'invention est nouvelle en ce qu'elle comporte les caractéristiques mentionnées dans la partie caractérisante de la revendication 1 annexée. En particulier, la pièce manufacturée selon l'invention comporte un support portant le patchwork, le patchwork recouvrant au moins partiellement le support et étant lié à ce support. D'autres caractéristiques distinguant la pièce manufacturée selon l'invention du contenu du document US 5 273 697 A susmentionné sont que le support est au moins partiellement fait d'élastomère et que la liaison du patchwork au support comprend une continuité de l'élastomère entre le patchwork et le support.

La pièce manufacturée définie ci-dessus peut incorporer une ou plusieurs autres caractéristiques avantageuses, isolément ou en combinaison, en particulier parmi celles définies ci-après.

Avantageusement, au moins un premier élément en feuille parmi les éléments en feuille de l'assemblage est d'une première couleur sur au moins une partie de son épaisseur, au moins un deuxième élément en feuille parmi les éléments en feuille de l'assemblage étant d'une deuxième couleur sur au moins une partie de son épaisseur, le premier élément en feuille et le deuxième élément en feuille constituant l'une des paires d'éléments en feuille attenants, la deuxième couleur étant différente de la première couleur.

Avantageusement, la pièce manufacturée est un élément flexible choisi parmi une bande flexible, une plaque flexible, une paroi flexible, un film flexible et une feuille flexible.

Avantageusement, la couche est une première couche de l'élément flexible, le support étant une deuxième couche de l'élément flexible.

L'invention a également pour objet un brin de bracelet de montre, qui comprend une pièce manufacturée telle que définie plus haut.

L'invention a encore pour objet un procédé de fabrication d'une pièce manufacturée. Ce procédé de fabrication comporte des étapes dans lesquelles :
a) on se dote d'éléments en feuille au moins partiellement faits de matière réticulable en élastomère et constituant ensemble un puzzle ;
b) on assemble le puzzle de manière que les éléments en feuille se prolongent mutuellement, et
c) en vulcanisant au moins le puzzle assemblé, on fait se lier entre eux au moins les éléments en feuille au niveau de bords de ces éléments en feuille.

Par rapport à ce que divulgue le document US 5 273 697 A susmentionné, le procédé selon l'invention est nouveau en ce que, dans l'étape a), on se dote également d'un support fait de matière réticulable en élastomère, tandis que, dans l'étape b), on assemble le puzzle sur le support ou on place le puzzle assemblé et le support l'un sur l'autre, et que, dans l'étape c), on fait se lier les éléments en feuille au support par vulcanisation.

Le procédé de fabrication défini ci-dessus peut incorporer une ou plusieurs autres caractéristiques avantageuses, isolément ou en combinaison, en particulier parmi celles définies ci-après.

Avantageusement, dans l'étape c), le puzzle assemblé est soumis à une compression dans le sens de son épaisseur.

Avantageusement, dans l'étape c), les éléments en feuille sont pressés contre le support.

Les étapes a), b) et c) peuvent être telles que leur mise en oeuvre conduit à la fabrication d'une pièce manufacturée ayant la forme d'une plaque. Dans ce cas, le procédé peut comprendre une étape qui suit l'étape c) et dans laquelle :
d) on refend la plaque perpendiculairement à son épaisseur.

### Brève description des dessins

D'autres avantages et caractéristiques ressortiront plus clairement de la description qui va suivre d'un mode particulier de réalisation de l'invention donné à titre d'exemple non limitatif et représenté aux dessins annexés, parmi lesquels :
- la figure 1 est une vue en plan d'un brin de bracelet de montre comprenant une bande découpée dans une pièce manufacturée selon un mode de réalisation de l'invention,
- la figure 2 est une vue schématique, en perspective, de la pièce manufacturée selon le mode de réalisation de l'invention,
- la figure 3 est une vue en plan d'un ruban découpé selon un motif en réseau, en plusieurs éléments en feuille dont certains sont destinés à être employés pour réaliser la pièce manufacturée de la figure 2,
- la figure 4 est une vue en plan d'une partie non assemblée d'un puzzle fait d'éléments en feuille provenant de plusieurs rubans de couleurs différentes, dont un est celui représenté seul sur la figure 3 et dont deux autres sont découpés selon le même motif en réseau que le ruban de cette figure 3,
- la figure 5 est une vue en plan qui illustre une étape de la fabrication de la pièce manufacturée de la figure 2, à savoir son assemblage à partir du puzzle partiellement représenté sur la figure 4, et où une partie de ce puzzle est visible, assemblée et constituée des éléments en feuille absents sur la figure 4, et
- la figure 6 est une vue en perspective d'une pièce manufacturée selon un mode de réalisation du préambule de la revendication 1.

### Description de modes préférentiels de l'invention

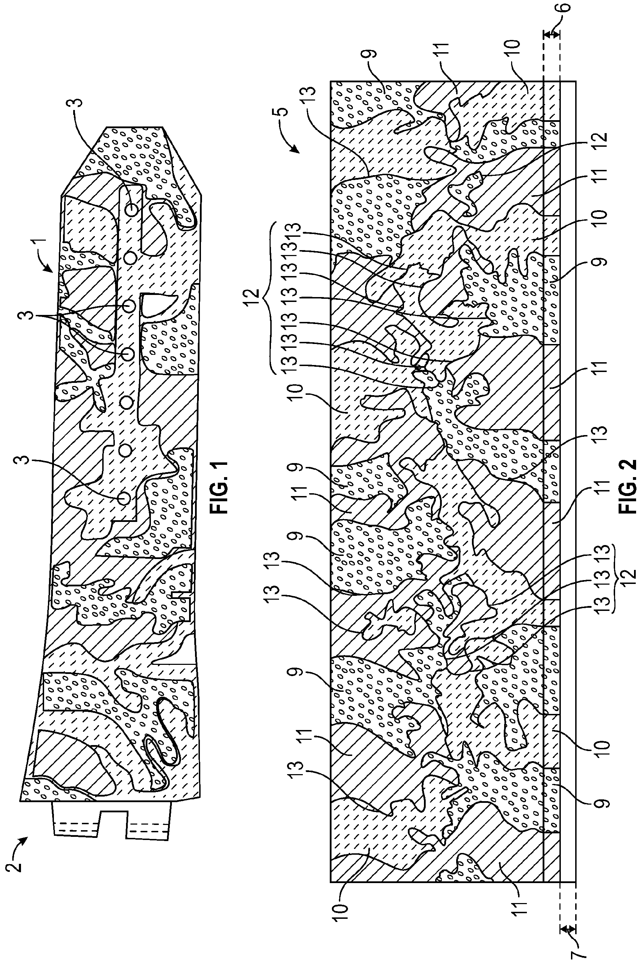

Sur la figure 1, la référence 1 désigne l'un de deux brins de bracelet de montre, flexibles, qui forment ensemble un bracelet de montre et qui portent chacun un décor du type camouflage militaire. Le brin de bracelet de montre 1 comporte une extrémité proximale 2 à même de recevoir une barrette d'attache et d'être attachée à une boîte de montre au moyen de cette barrette d'attache. Le brin de bracelet de montre 1 est percé de trous 3 se succédant sur une partie de sa longueur. Chacun des trous 3 est prévu pour le passage d'un organe d'une boucle permettant d'attacher le brin de bracelet de montre 1 à l'autre brin de bracelet de montre et de fermer ainsi le bracelet de montre, par exemple autour d'un poignet.

Le brin de bracelet de montre 1 comporte une bande flexible qui a été découpée dans une pièce manufacturée 5 selon un mode de réalisation de l'invention. Cette pièce manufacturée 5 est représentée seule sur la figure 1.

La pièce manufacturée 5 comporte une couche 6, que forme un patchwork. Cette couche 6 est destinée à être une couche extérieure, afin que le décor formé par le patchwork soit visible. Dans l'exemple représenté, le décor formé par le patchwork est un décor du type camouflage militaire. Toutefois, il peut en être autrement et le patchwork peut former n'importe quel décor, y compris un décor représentant un paysage, un ou plusieurs personnages, des figures géométriques, la répétition d'un ou plusieurs motifs, etc.

La pièce manufacturée 5 comporte un support 7 portant la couche 6. Dans le mode de réalisation représenté sur la figure 2, la pièce manufacturée 5 est une bande flexible et le support 7 est une deuxième couche de la pièce manufacturée 1, qui a la couche 6 comme première couche.

Le patchwork formant la couche 6 est un assemblage d'éléments en feuille 9, 10 et 11 qui n'ont pas tous la même couleur : les éléments en feuille 9 sont d'une première couleur, tandis que les éléments en feuille 10 sont d'une deuxième couleur et que les éléments en feuille 11 sont d'une troisième couleur. Le nombre des couleurs des éléments en feuille formant la couche 6 peut également être égal à deux ou être supérieur à trois.

Chaque élément en feuille 9, 10 ou 11 a une étendue délimitée par un contour 12 périphérique, en boucle fermée. Lorsqu'ils sont adjacents, deux éléments en feuille parmi les éléments en feuille 9, 10 et 11 ont un segment de contour 13 commun, appartenant à leurs contours 12 respectifs. Lorsqu'ils ont un segment de contour 13 commun, deux éléments en feuille parmi les éléments en feuille 9, 10 et 11 sont liés l'un à l'autre au niveau de leur segment de contour 13 commun. Chaque élément en feuille 9, 10 ou 11 a une épaisseur constante ou non, qui est perpendiculaire à son étendue et qui est également l'épaisseur de la couche 6.

En plus d'être liés entre eux, les éléments en feuille 9, 10 et 11 de la couche 6 sont liés au support 7.

Les éléments en feuille 9, 10 et 11 formant la couche 6 font partie d'une pièce d'un seul tenant faite d'élastomère. Dans le mode de réalisation de l'invention, cette pièce d'un seul tenant faite d'élastomère est la pièce manufacturée 5 et comprend en outre le support 7. En alternative, la pièce manufacturée 5 peut être seulement en partie faite d'élastomère et comporter un ou plusieurs autres constituants tels qu'un renfort en aramide ou qu'un insert en polymère non élastique.

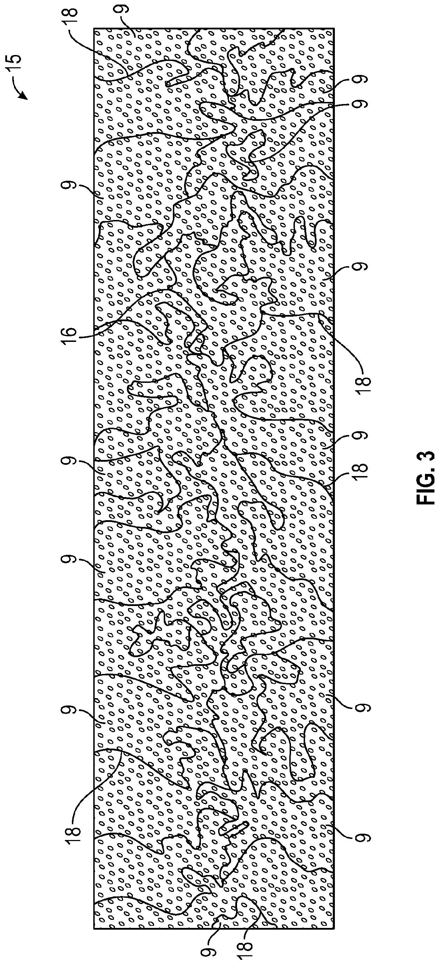

Les éléments en feuille 9 proviennent d'un même ruban, qui est le ruban représenté seul et référencé 15 sur la figure 3. Ce ruban 15 est fait de matière réticulable en polymère, par exemple en caoutchouc cru. Le ruban 15 est découpé selon un motif en réseau 16. Ce motif en réseau 16 est le motif résultant de la réunion des segments de contour 13 qui sont chacun commun à deux éléments en feuille attenants parmi les éléments en feuilles 9, 10 et 11 de la couche 6.

Le ruban 15 est de la première couleur. Il s'agit d'un premier ruban.

Les éléments en feuille 10 proviennent d'un deuxième ruban, qui est de la deuxième couleur, qui fait de matière réticulable en polymère et qui est lui aussi découpé selon le motif en réseau 16. Identique au premier ruban 15 sauf en ce qu'il est de la deuxième couleur, ce deuxième ruban n'est pas représenté dans un souci de simplicité. Les éléments en feuille 11 proviennent d'un troisième ruban, qui est de la troisième couleur, qui fait de matière réticulable en polymère et qui est lui aussi découpé selon le motif en réseau 16. Identique au premier ruban 15 sauf en ce qu'il est de la troisième couleur, ce troisième ruban n'est pas représenté dans un souci de simplicité.

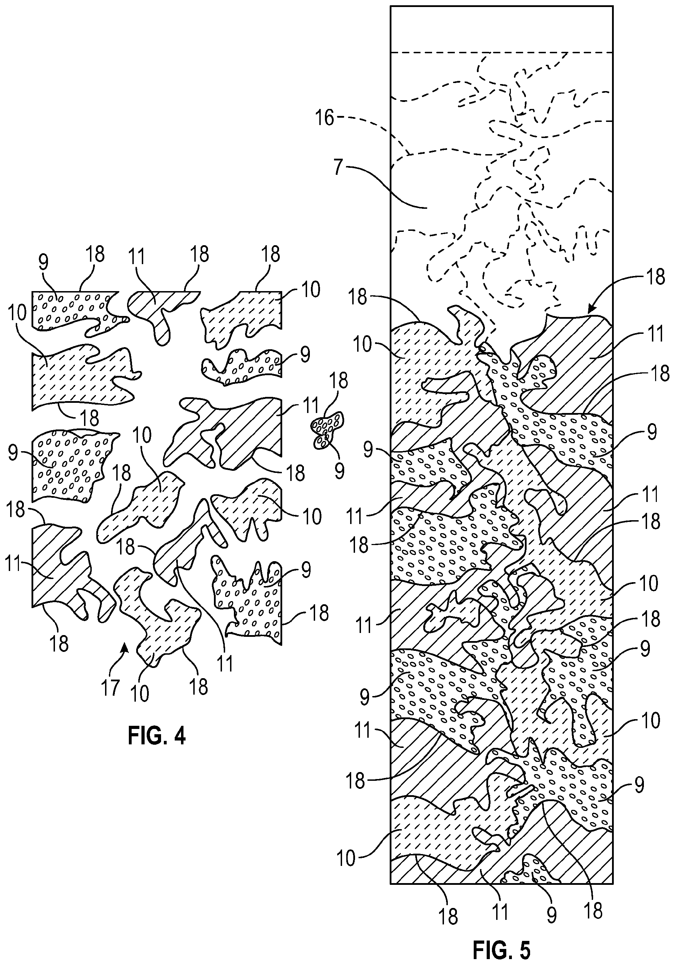

Une partie d'un puzzle 17 constitué des éléments en feuille 9, 10 et 11 encore non réticulés ou partiellement réticulés, c'est-à-dire à l'état d'ébauches, est représentée sur la figure 4. L'autre partie de ce puzzle 17 est visible sur la figure 5. Sur les figures 4 et 5, les bords des éléments en feuille 9, 10 et 11 non réticulés ou partiellement réticulés sont référencés 18.

Pour réaliser la pièce manufacturée 5, on met en oeuvre un procédé de fabrication dans une étape duquel on réalise le puzzle 17. Les éléments en feuille 9 encore non réticulés ou partiellement réticulés du puzzle 17 sont prélevés parmi les éléments en feuille résultant du découpage du premier ruban 15 selon le motif en réseau 16. Les éléments en feuille 10 encore non réticulés ou partiellement réticulés du puzzle 17 sont prélevés parmi les éléments en feuille résultant du découpage du deuxième ruban selon le motif en réseau 16. Les éléments en feuille 11 encore non réticulés ou partiellement réticulés du puzzle 17 sont prélevés parmi les éléments en feuille résultant du découpage du troisième ruban selon le motif en réseau 16.

Après avoir été constitué, le puzzle 17 n'est pas encore assemblé, ce qui est le cas de sa partie représentée sur la figure 4. Après l'avoir constitué, on assemble le puzzle 17 sur une des deux faces du support 7 non réticulé ou partiellement réticulé, c'est-à-dire à l'état de préforme, ce qu'illustre la figure 5 où seule la partie déjà assemblée du puzzle 17 est présente.

De préférence, un élastomère identique est utilisé pour le support 17 et pour les éléments en feuilles 9, 10 et 11. On peut également réaliser les éléments en feuilles 9, 10 et 11 en deux polymères différents ou plus, auquel cas ces polymères seront de préférence de même nature chimique ou bien tels que leurs natures chimiques respectives soient compatibles en permettant une réticulation entre eux. On peut également réaliser le support 17 et au moins une partie des éléments en feuilles 9, 10 et 11 en deux polymères différents, auquel cas ces polymères seront de préférence de même nature chimique ou bien tels que leurs natures chimiques respectives soient compatibles en permettant une réticulation entre eux.

Par exemple, le ou les élastomères employés peuvent être choisis parmi les élastomères synthétiques et les élastomères à base de caoutchouc naturel, y compris le caoutchouc naturel. De préférence, le ou les élastomères employés sont du caoutchouc FKM.

Après avoir assemblé le puzzle 17 sur le support 7 à l'état de préforme, on vulcanise l'empilement constitué de ce puzzle 17 et de ce support 7 à l'état de préforme, entre deux plaques de compression d'une navette d'étuvage. Lors de la vulcanisation, le puzzle 17 est compressé dans le sens de son épaisseur et pressé contre le support 17, par les deux plaques de compression de la navette d'étuvage. Dans le puzzle 17, des segments de bord des éléments en feuille 9, 10 et 11 sont complémentaires et en en regard. Lorsque deux segments de bord d'éléments en feuille 9, 10 et 11 sont complémentaires et en regard dans le puzzle 17, ils sont maintenus en contact et pressés l'un sur l'autre pendant la vulcanisation, qui les amène à se surmouler l'un sur l'autre. De manière semblable, les éléments en feuille 9, 10 et 11 sont surmoulés sur le support 7 pendant la vulcanisation.

Pendant la vulcanisation, le puzzle 17 est transformé en le patchwork formant la couche 6.

La vulcanisation provoque des réticulations qui se traduisent par la création de chaînes réticulées faisant partie du réseau réticulé tridimensionnel de l'élastomère élaboré. Plusieurs portions de ce réseau réticulé tridimensionnel se trouvent au sein du support 7 et des éléments en feuille 9, 10 et 11, tout en appartenant à un seul et même réseau réticulé tridimensionnel qui est celui de l'élastomère. Lorsqu'ils sont adjacents, deux éléments en feuille parmi les éléments en feuille 9, 10 et 11 sont de ce fait liés l'un à l'autre au niveau de leur segment de contour 13 commun, par des chaînes réticulées qui traversent ce segment de contour 13 commun, à l'intérieur du patchwork, en appartenant pour partie à l'élastomère de l'un des deux éléments en feuille adjacents et pour partie à l'élastomère de l'autre élément en feuille parmi ces deux éléments en feuille adjacents. De plus, les éléments en feuille 9, 10 et 11 de la couche 6 sont liés au support 7 par des chaînes réticulées, qui appartiennent pour partie à l'élastomère de la couche 6 et pour partie à l'élastomère du support 7.

Le procédé pour fabriquer la pièce manufacturée 5 peut être adapté de manière que la face extérieure du patchwork formé par la couche 6 présente un motif en relief et/ou une texture particulière.

Lorsque la vulcanisation a été effectuée, la pièce manufacturée 5 peut être ou non refendue perpendiculairement à son épaisseur. Par exemple, la pièce manufacturée 5 peut être refendue afin de lui donner une épaisseur prédéfinie. La pièce manufacturée 5 peut également être refendue en vue que la partie avec le patchwork parmi les deux parties résultant de la refente soit assemblée à une couche inférieure souple, par exemple par couture.

Plusieurs exemplaires identiques de la pièce manufacturée 5 peuvent être aisément réalisés.

Si l'on veut réaliser plusieurs exemplaires identiques du brin de bracelet de montre 1, ces exemplaires identiques du brin de bracelet de montre 1 sont découpés au même endroit, chacun dans l'un de plusieurs exemplaires identiques de cette pièce manufacturée 5, ce qui est aisé à faire.

Si l'on veut réaliser plusieurs exemplaires différents du brin de bracelet de montre 1, ces exemplaires différents sont découpés dans des endroits décalés entre eux, auquel cas chacun d'eux peut l'être dans un même exemplaire de la pièce manufacturée 5 ou bien dans l'un de plusieurs exemplaires identiques de la pièce manufacturée 5.

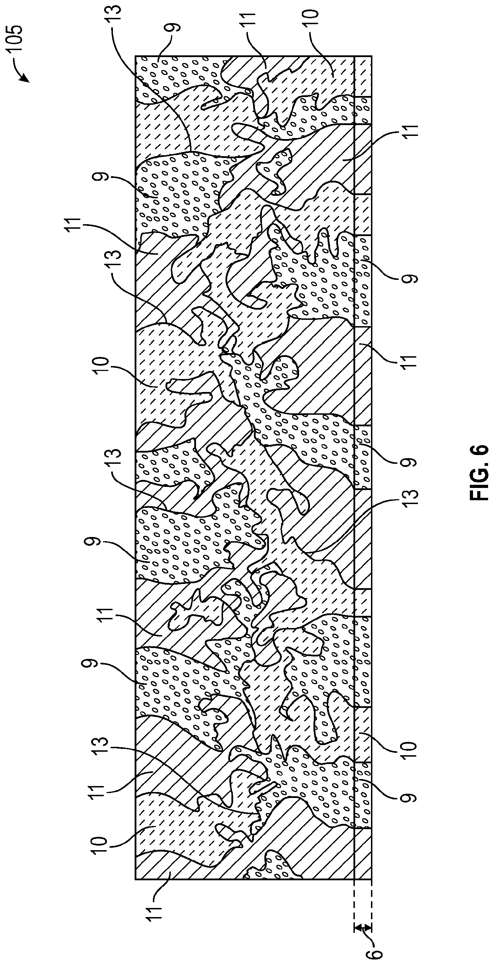

Sur la figure 6 est représentée une pièce manufacturée 105 selon un mode de réalisation du préambule de la revendication 1. La pièce manufacturé 105 se distingue de la pièce manufacturée 5 en ce qu'elle est dépourvue du support 7. En d'autres termes, la pièce manufacturée 105 ne comporte qu'une seule couche, à savoir la couche 6 formant le patchwork. Pour le reste, la pièce manufacturée 105 est identique à la pièce manufacturée 5.

Pour réaliser la pièce manufacturée 105, on assemble le puzzle 17 sur l'une des deux plaques de compression de la navette d'étuvage. Ensuite, le puzzle 17 est compressé entre ces deux plaques de compression. On vulcanise le puzzle 17, lors de quoi celui est maintenu compressé entre les deux plaques de compression de la navette d'étuvage. Pendant la vulcanisation, le puzzle 17 est transformé en le patchwork formant la couche 6.

L'invention ne se limite pas au mode de réalisation décrit plus haut, mais seulement aux revendications annexées.

En particulier, le support 7 peut présenter une forme en volume, c'est-à-dire ne pas être une bande ou une plaque. Par exemple, le support 7 peut être un pavé, une coque de protection, etc. De plus, le patchwork formant la couche 6 peut être porté par une surface non plate du support 4. Par exemple, il peut être porté par une surface bombée du support 7.

Par ailleurs, la pièce manufacturée 5 ou 105 peut faire partie d'un objet autre qu'un bracelet de montre. Par exemple, elle peut faire partie d'une coque de protection telle qu'une coque de protection d'un smartphone, ou même constituer cette coque de protection. La pièce manufacturée 5 ou 105 peut également faire partie d'un article de maroquinerie. Par exemple, elle peut constituer une paroi d'un porte-monnaie ou d'un autre article de maroquinerie. La pièce manufacturée 5 ou 105 peut également faire partie d'une ceinture ou la constituer.

## Revendications

1. Pièce manufacturée, comportant au moins une couche (6), cette couche (6) comprenant un assemblage d'éléments en feuille (9, 10, 11) au moins partiellement faits d'élastomère, se prolongeant mutuellement sans chevauchement et formant ensemble un patchwork en comptant des paires d'éléments en feuille attenants qui ont un segment de contour (13) commun et qui sont liés l'un à l'autre au niveau de leur segment de contour (13) commun par une continuité de l'élastomère entre eux, à travers ce segment de contour (13) commun et à l'intérieur du patchwork, **caractérisée en ce qu'**elle comporte un support (7) portant le patchwork, le patchwork recouvrant au moins partiellement le support (7) et étant lié à ce support (7), et **en ce que** le support (7) est au moins partiellement fait d'élastomère, la liaison du patchwork au support (7) comprenant une continuité de l'élastomère entre le patchwork et le support (7).

2. Pièce manufacturée selon la revendication 1, **caractérisée en ce qu'**au moins un premier élément en feuille (9) parmi les éléments en feuille (9, 10, 11) de l'assemblage est d'une première couleur sur au moins une partie de son épaisseur, au moins un deuxième élément en feuille (10) parmi les éléments en feuille (9, 10, 11) de l'assemblage étant d'une deuxième couleur sur au moins une partie de son épaisseur, le premier élément en feuille (9) et le deuxième élément en feuille (10) constituant l'une des paires d'éléments en feuille attenants, la deuxième couleur étant différente de la première couleur.

3. Pièce manufacturée selon l'une des revendications précédentes, **caractérisée en ce que** cette pièce manufacturée est un élément flexible choisi parmi une bande flexible, une plaque flexible, une paroi flexible, un film flexible et une feuille flexible.

4. Pièce manufacturée selon la revendication 3, **caractérisée en ce que** la couche (6) est une première couche de l'élément flexible, le support (7) étant une deuxième couche de l'élément flexible.

5. Brin de bracelet de montre, **caractérisé en ce qu'**il comprend une pièce manufacturée (5) selon l'une des revendications 3 et 4.

6. Procédé de fabrication d'une pièce manufacturée (5), comportant des étapes dans lesquelles :
a) on se dote d'éléments en feuille (9, 10, 11) au moins partiellement faits de matière réticulable en élastomère et constituant ensemble un puzzle (17)
b) on assemble le puzzle (17) de manière que les éléments en feuille (9, 10, 11) se prolongent mutuellement, et
c) en vulcanisant au moins le puzzle (17) assemblé, on fait se lier entre eux au moins les éléments en feuille (9, 10, 11) au niveau de bords (18) de ces éléments en feuille (9, 10, 11),
**caractérisé en ce que**, dans l'étape a), on se dote également d'un support (7) fait de matière réticulable en élastomère, **en ce que**, dans l'étape b), on assemble le puzzle (17) sur le support (7) ou on place le puzzle (17) assemblé et le support (7) l'un sur l'autre, et **en ce que**, dans l'étape c), on fait se lier les éléments en feuille (9, 10, 11) au support (7) par vulcanisation.

7. Procédé de fabrication selon la revendication 6, **caractérisé en ce que**, dans l'étape c), les éléments en feuille (9, 10, 11) sont pressés contre le support (7).

8. Procédé de fabrication selon la revendication 6 ou 7, **caractérisé en ce que** ce procédé de fabrication est un procédé de fabrication d'un article manufacturé selon l'une des revendications 1 à 4.

## Patentansprüche

1. Gefertigtes Teil, umfassend mindestens eine Schicht (6), wobei diese Schicht (6) eine Zusammensetzung von Blattelementen (9, 10, 11) aufweist, die mindestens teilweise aus Elastomer bestehen, die sich gegenseitig ohne Überlappung verlängern und zusammen ein Patchwork mit Paaren aneinandergrenzender Blattelemente bilden, die ein gemeinsames Kontursegment (13) haben und die an ihrem gemeinsamen Kontursegment (13) durch eine Fortsetzung des Elastomers zwischen ihnen, über dieses gemeinsame Kontursegment (13) und im Innern des Patchworks, miteinander verbunden sind, **dadurch gekennzeichnet, dass** es einen Träger (7) umfasst, der das Patchwork trägt, wobei das Patchwork den Träger (7) mindestens teilweise bedeckt und mit diesem Träger (7) verbunden ist, und dadurch, dass der Träger (7) mindestens teilweise aus Elastomer besteht, wobei die Verbindung des Patchworks mit dem Träger (7) eine Fortsetzung des Elastomers zwischen dem Patchwork und dem Träger (7) aufweist.

2. Gefertigtes Teil nach Anspruch 1, **dadurch gekennzeichnet, dass** mindestens ein erstes Blattelement (9) von den Blattelementen (9, 10, 11) der Zusammensetzung eine erste Farbe auf mindestens einem Teil seiner Dicke aufweist, mindestens ein zweites Blattelement (10) von den Blattelementen (9, 10, 11) der Zusammensetzung eine zweite Farbe auf mindestens einem Teil seiner Dicke aufweist, wobei das erste Blattelement (9) und das zweite Blattelement (10) eines der Paare aneinandergrenzender Blattelemente bilden, wobei sich die zweite Farbe von der ersten Farbe unterscheidet.

3. Gefertigtes Teil nach einem der vorstehenden Ansprüche, **dadurch gekennzeichnet, dass** dieses gefertigte Teil ein flexibles Element ist, das aus einem flexiblen Band, einer flexiblen Platte, einer flexiblen Wand, einer flexiblen Folie und einem flexiblen Blatt ausgewählt wurde.

4. Gefertigtes Teil nach Anspruch 3, **dadurch gekennzeichnet, dass** die Schicht (6) eine erste Schicht des flexiblen Elements ist, wobei der Träger (7) eine zweite Schicht des flexiblen Elements ist.

5. Strang eines Uhrarmbands, **dadurch gekennzeichnet, dass** er ein gefertigtes Teil (5) nach einem der Ansprüche 3 und 4 umfasst.

6. Verfahren zur Herstellung eines gefertigten Teils (5), das Schritte umfasst, in denen:
a) man sich mit Blattelementen (9, 10, 11) ausstattet, die mindestens teilweise aus zu Elastomer vernetzbarem Material bestehen und zusammen ein Puzzle (17) bilden,
b) man das Puzzle (17) so zusammensetzt, dass die Blattelemente (9, 10, 11) sich gegenseitig verlängern, und
c) man durch Vulkanisierung von mindestens des zusammengesetzten Puzzles (17) eine Verbindung mindestens der Blattelemente (9, 10, 11) untereinander an Rändern (18) dieser Blattelemente (9, 10, 11) herstellt,
**dadurch gekennzeichnet, dass** man sich im Schritt a) ebenfalls mit einem Träger (7) ausstattet, der aus zu Elastomer vernetzbarem Material besteht, dadurch, dass man im Schritt b) das Puzzle (17) auf dem Träger (7) zusammensetzt oder das zusammengesetzte Puzzle (17) und den Träger (7) aufeinander platziert, und dadurch, dass man im Schritt c) eine Verbindung der Blattelemente (9, 10, 11) mit dem Träger (7) durch Vulkanisierung herstellt.

7. Verfahren zur Herstellung nach Anspruch 6, **dadurch gekennzeichnet, dass** im Schritt c) die Blattelemente (9, 10, 11) gegen den Träger (7) gepresst werden.

8. Verfahren zur Herstellung nach Anspruch 6 oder 7, **dadurch gekennzeichnet, dass** dieses Herstellungsverfahren ein Verfahren zur Herstellung eines nach einem der Ansprüche 1 bis 4 gefertigten Gegenstands ist.

## Claims

1. A manufactured part, having at least one layer (6), this layer (6) comprising an assembly of sheet elements (9, 10, 11) at least partially made of elastomer, mutually extending without overlapping and together forming a patchwork including pairs of adjoining sheet elements which have a common contour segment (13) and which are linked to one another at the level of their common contour segment (13) by a continuity of the elastomer between them, through this common contour segment (13) and inside the patchwork, **characterized in that** it has a support (7) carrying the patchwork, the patchwork at least partially covering the support (7) and being linked to this support (7), and that the support (7) is at least partially made of elastomer, the linkage of the patchwork to the support (7) comprising a continuity of the elastomer between the patchwork and the support (7).

2. The manufactured part according to Claim 1, **characterized in that** at least one first sheet element (9) among the sheet elements (9, 10, 11) of the assembly is of a first colour on at least one part of its thickness, at least one second sheet element (10) among the sheet elements (9, 10, 11) of the assembly being of a second colour on at least one part of its thickness, the first sheet element (9) and the second sheet element (10) constituting one of the pairs of adjoining sheet elements, the second colour differing from the first colour.

3. The manufactured part according to any one of the preceding claims, **characterized in that** this manufactured part is a flexible element selected from a flexible band, a flexible plate, a flexible wall, a flexible film and a flexible sheet.

4. The manufactured part according to Claim 3, **characterized in that** the layer (6) is a first layer of the flexible element, the support (7) being a second layer of the flexible element.

5. A watch strap strand, **characterized in that** it comprises a manufactured part (5) according to any one of Claims 3 and 4.

6. A manufacturing method for a manufactured part (5), comprising steps in which:
a) sheet elements (9, 10, 11) at least partially made of crosslinkable material made of elastomer and together constituting a puzzle (17) are used;
b) the puzzle (17) is assembled such that the sheet elements (9, 10, 11) extend mutually, and
c) by vulcanizing at least the assembled puzzle (17), at least the sheet elements (9, 10, 11) are linked between them at the level of the edges (18) of these sheet elements (9, 10, 11),
**characterized in that**, in step a), a support (7) made of crosslinkable elastomer material is also used, **in that**, in step b), the puzzle (17) is assembled on the support (7) or the assembled puzzle (17) and the support (7) are placed on one another, and **in that**, in step c), the sheet elements (9, 10, 11) are linked to the support (7) by vulcanization.

7. The manufacturing method according to Claim 6, **characterized in that**, in step c), the sheet elements (9, 10, 11) are pressed against the support (7).

8. The manufacturing method according to Claim 6 or 7, **characterized in that** this manufacturing method is a manufacturing method for a manufactured article according to any one of Claims 1 to 4.
